# EUROPEAN PATENT APPLICATION

(11) **EP 4 653 769 A1**
(43) Date of publication of application: **26.11.2025**
(21) Application number: 25173988.4
(22) Date of filing: 02.05.2025
(51) Int. Cl.: F23R 3/12, F23D 14/64, F23R 3/28

(54) **GAS TURBINE ENGINE AND FUEL NOZZLE ASSEMBLY THEREFOR**

(30) Priority: 22.05.2024 US 202418671376
(71) Applicant: General Electric Company, Cincinnati, Ohio 45215 (US)
(72) Inventor: NAIK, Pradeep, 560066 Bengaluru (IN); BADHUK, Pabitra, 560066 Bengaluru (IN); PET T, Prithiviraaj, 560066 Bengaluru (IN); SAMPATH, Karthikeyan, 560066 Bengaluru (IN); BUCARO, Michael, 12345 Schenectady (US); SHEALY, James, 45069 West Chester (US); VUKANTI, Perumallu, 560066 Bengaluru (IN); BENJAMIN, Michael, Evendale, 45241 (US); PAL, Sibtosh, 45241 Evendale (US); COOPER, Clayton Stuart, 45241 Evendale (US)
(74) Representative: Openshaw & Co.

(57) **Abstract**

A gas turbine engine (10), comprising a compressor section (12), a combustion section (14), and a turbine section (16) in serial flow arrangement, with the combustion section (14) comprising a combustion liner at least partially defining a combustion chamber (50) and a gaseous fuel nozzle assembly (48) comprising a plurality of mixing tubes (100, 200, 300). The plurality of mixing tubes (100, 200, 300) can have an air flow passage (140) terminating in a mixing tube outlet (142) fluidly coupled to the combustion chamber (50), a gaseous fuel orifice (150) fluidly coupled to the air flow passage (140), and a turbulator (160) disposed at least partially upstream of the gaseous fuel orifice (150).

## Description

### TECHNICAL FIELD

The present subject matter relates generally to a gas turbine engine having a fuel nozzle assembly.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, hydrocarbon fuels are used in the combustor of a turbine engine. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

To reduce the environmentally unwanted byproducts, other fuels, such as hydrogen, are being explored. Hydrogen or hydrogen mixed with another element has a higher flame temperature than traditional hydrocarbon fuels. That is, hydrogen or a hydrogen mixed fuel typically has a wider flammable range and a faster burning velocity than traditional hydrocarbon-based fuels.

### BRIEF DESCRIPTION OF THE DRAWINGS

In the drawings:
FIG. 1 is a schematic view of a turbine engine having a compression section, a combustion section, and a turbine section in accordance with various aspects described herein.
FIG. 2 is a schematic view of the combustion section of FIG. 1 along line II-II in accordance with various aspects described herein.
FIG. 3 is a schematic view illustrating portions of a fuel nozzle assembly, viewed from aft, in accordance with various aspects described herein.
FIG. 4 is a schematic cross-sectional view of the fuel nozzle assembly of FIG. 3, along line IV-IV, and connected to a liner in accordance with various aspects described herein.
FIG. 5 is a schematic cross-sectional view of the fuel nozzle assembly of FIG. 3, along line V-V, and connected to a liner in accordance with various aspects described herein.
FIG. 6 is a schematic cross-sectional view of a variation of the fuel nozzle assembly of FIG. 5 in accordance with various aspects described herein.
FIG. 7 is a schematic view illustrating portions of a variation of the fuel nozzle assembly of FIG. 3, viewed from aft, in accordance with various aspects described herein.
FIG. 8 is a schematic cross-sectional view of a variation of the fuel nozzle assembly of FIG. 4 in accordance with various aspects described herein.
FIG. 9 is a schematic view illustrating portions of a variation of the fuel nozzle assembly of FIG. 3, viewed from aft, in accordance with various aspects described herein.
FIG. 10A is a schematic cross-sectional view illustrating a mixing tube in accordance with various aspects described herein.
FIG. 10B is a schematic end view illustrating the mixing tube of FIG. 10A in accordance with various aspects described herein.
FIG. 11A is a schematic view illustrating an arrangement of turbulators and fuel orifices of a mixing tube in accordance with various aspects described herein.
FIG. 11B is a schematic view illustrating another arrangement of turbulators and fuel orifices of a mixing tube in accordance with various aspects described herein.
FIG. 11C is a schematic view illustrating yet another arrangement of turbulators and a fuel orifice of a mixing tube in accordance with various aspects described herein.
FIG. 12 is a schematic cross-sectional view illustrating a mixing tube in accordance with various aspects described herein.
FIG. 13A is a schematic perspective view illustrating a turbulator and a fuel orifice of a mixing tube in accordance with various aspects described herein.
FIG. 13B is a schematic perspective view illustrating a turbulator and a pair of fuel orifices of a mixing tube in accordance with various aspects described herein.
FIG. 13C is a schematic perspective view illustrating a turbulator and a fuel orifice of a mixing tube in accordance with various aspects described herein.
FIG. 14A is a schematic cross-sectional view illustrating a mixing tube in accordance with various aspects described herein.
FIG. 14B is a schematic cross-sectional view illustrating a mixing tube in accordance with various aspects described herein.
FIG. 14C is a schematic cross-sectional view illustrating a mixing tube in accordance with various aspects described herein.
FIG. 14D is a schematic cross-sectional view illustrating a mixing tube in accordance with various aspects described herein.
FIG. 15A is a schematic view illustrating portions of a fuel nozzle assembly, viewed from aft, in accordance with various aspects described herein.
FIG. 15B is a schematic view illustrating portions of a fuel nozzle assembly, viewed from aft, in accordance with various aspects described herein.
FIG. 15C is a schematic view illustrating portions of a fuel nozzle assembly, viewed from aft, in accordance with various aspects described herein.
FIG. 16A is a schematic cross-sectional view illustrating a mixing tube in accordance with various aspects described herein.
FIG. 16B is a schematic cross-sectional view of the fuel nozzle assembly of FIG. 16A, along line B-B, in accordance with various aspects described herein.
FIG. 16C is a schematic cross-sectional view of the fuel nozzle assembly of FIG. 16A, along line C-C, in accordance with various aspects described herein.
FIG. 17 is a schematic cross-sectional view illustrating a mixing tube in accordance with various aspects described herein.
FIG. 18 is a flow chart diagram of a method of operating a gas turbine engine in accordance with various aspects described herein.

### DETAILED DESCRIPTION

Aspects of the disclosure described herein are directed to a combustor. For purposes of illustration, the present disclosure will be described with respect to a turbine engine. It will be understood, however, that aspects of the disclosure described herein are not so limited and that a combustor as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluidly coupled" means that a fluid is capable of making the connection between the areas specified.

The term "nozzle" has been used in various ways in the context of gas turbine engines. In the instant application, "nozzle" refers to a component having a portion for fluid coupling to a fuel supply and having at least one portion for fluidly coupling with a combustion chamber.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only the dimensions, positions, order, and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

"Proximate" as used herein is a descriptor for locating parts described herein. Further, the term "proximate" means nearer or closer to the part recited than the following part. For example, a first hole proximate a wall, the first hole located upstream from a second hole means that the first hole is closer to the wall than the first hole is to the second hole.

Additionally, as used herein, a "controller" can include a component configured or adapted to provide instruction, control, operation, or any form of communication for operable components to effect the operation thereof. A controller can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), proportional resonant controller (PR), a hardware-accelerated logic controller (e.g. for encoding, decoding, transcoding, etc.), the like, or a combination thereof. Non-limiting examples of a controller can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can be configured for comparing a first value with a second value, and operating and controlling operations of additional components based on the satisfying of that comparison. For example, when a sensed, measured, or provided value is compared with another value, including a stored or predetermined value, the satisfaction of that comparison can result in actions, functions, or operations controllable by the controller.

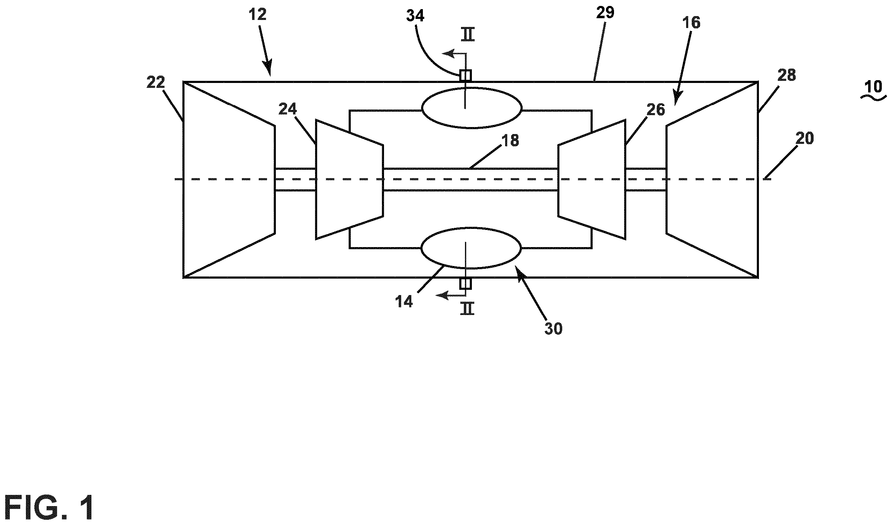

FIG. 1 is a schematic view of a turbine engine 10. As a non-limiting example, the turbine engine 10 can be used within an aircraft. The turbine engine 10 can include, at least, a compressor section 12, a combustion section 14, and a turbine section 16. A drive shaft 18 rotationally couples the compressor section 12 and turbine section 16, such that rotation of one affects the rotation of the other, and defines a rotational axis 20 for the turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about and enshroud one or more sections of the turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section 16 is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

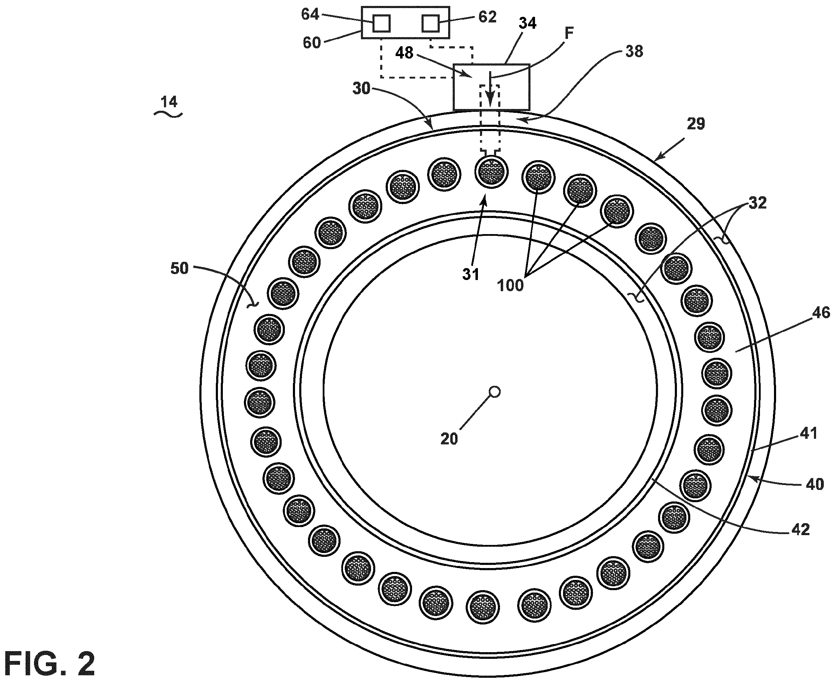

FIG. 2 depicts a cross-sectional view of the combustion section 14 along line II-II of FIG. 1. The combustion section 14 can include a combustor 30 with an annular arrangement of combustor sections 31 disposed around the centerline or rotational axis 20 of the turbine engine 10 (e.g., circumferentially spaced from each other in an annular configuration) (FIG. 1). The combustor sections 31 can, in some configurations, include or be configured as combustor or fuel cups. A fuel nozzle assembly 48 can be connected to each combustor section 31. The combustor 30 can have a can, can-annular, or annular arrangement depending on the type of engine in which the combustor 30 is located. In a non-limiting example, the combustor 30 can have a combination arrangement located with a shroud or casing 29 of the turbine engine 10. The shroud or casing 29 can enshroud or cover at least a portion of the combustion section 14.

The combustor 30 can be at least partially defined by a combustor liner 40. In some examples, the combustor liner 40 can include an outer liner 41 and an inner liner 42 concentric with respect to each other and arranged in an annular fashion about the engine centerline or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

The combustor liner 40 can at least partially define a combustion chamber 50 arranged annularly about the rotational axis 20. For example, a dome wall 46 may be substantially perpendicular to the rotational axis 20 and can cooperate with the outer liner 41, the inner liner 42, or both, to at least partially define the combustion chamber 50. A compressed air passage 32 can be defined at least in part by both the combustor liner 40 and the casing 29.

The combustor 30 can include or is connected to a fuel supply 34 (e.g., an external fuel manifold). The fuel nozzle assembly 48 fluidly couples the fuel supply 34 with the combustor sections 31 and the combustion chamber 50. The fuel nozzle assembly 48 can include a fuel nozzle 38 (e.g., a fuel nozzle body) and at least a portion of the dome wall 46. A fuel F can include any suitable fuel, including gaseous fuel, such as hydrogen fuel, in non-limiting examples, which can include 100% H₂ (e.g., without a diluent). For example, the fuel nozzle 38 can be a gaseous fuel nozzle, such as a gaseous hydrogen fuel nozzle, and the fuel nozzle assembly 48 can be a gaseous fuel nozzle assembly, such as a gaseous hydrogen fuel nozzle assembly. The combustor sections 31 can be separately connected to the dome wall 46. For example and without limitation, the combustor sections 31 can be connected to the dome wall 46 in a circumferentially spaced configuration. The combustor sections 31 can be disposed at a radial distance from the rotational axis 20 that is greater than a radial distance of the inner liner 42 and less than a radial distance of the outer liner 41. The fuel nozzle assembly 48 includes a plurality of mixing tubes 100. A controller 60 can be connected to and at least partially control operation of the fuel supply 34, the fuel nozzle assembly 48, or both. The controller 60 can include a processor 62 and a memory 64.

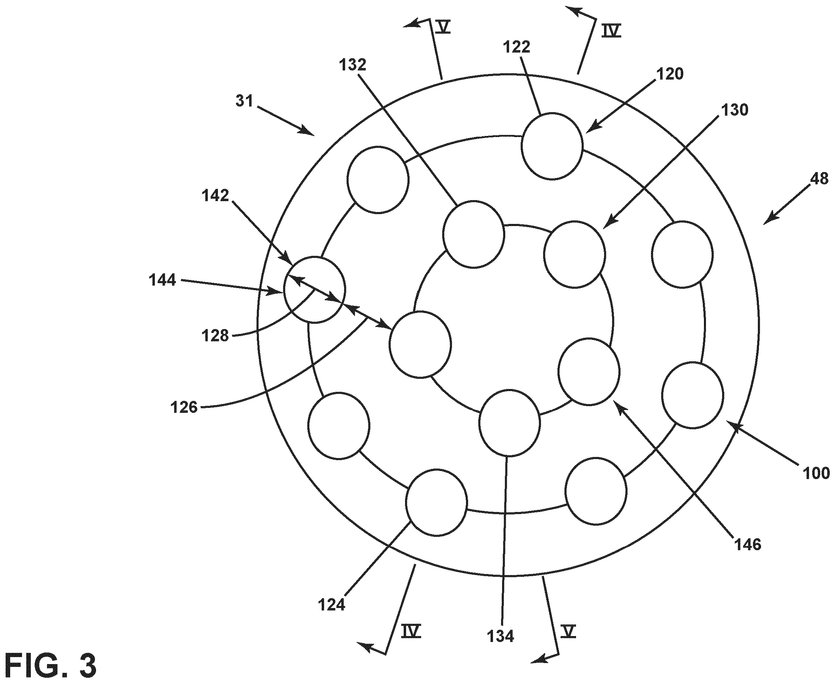

FIG. 3 depicts a portion of an example of the combustor section 31 viewed from aft. The illustrated portion can be provided, at least in part, by the fuel nozzle assembly 48. The plurality of mixing tubes 100 can include and be arranged in sets, which can include a first set of mixing tubes 120. The first set of mixing tubes 120 can include a first mixing tube 122 and a second mixing tube 124 that are offset from each other, such as radially, circumferentially, or both. The plurality of mixing tubes 100 can include a second set of mixing tubes 130, including a third mixing tube 132 and a fourth mixing tube 134. The first set of mixing tubes 120 can be offset (e.g., radially offset, linearly offset, spaced, etc.) from the second set of mixing tubes 130. For example and without limitation, the first set of mixing tubes 120 can be spaced from the second set of mixing tubes 130 by a distance 126 (e.g., a center-to-center distance) that, for example, is 150% to 500%, inclusive of endpoints, of the diameters 128 (e.g., hydraulic diameters) of the plurality of mixing tubes 100 at mixing tube outlets 142 of the plurality of mixing tubes 100. The mixing tube outlets 142 can include mixing tube outlets 144 of the first set of mixing tubes 120 and mixing tube outlets 146 of the second set of mixing tubes 130. In some examples, the first set of mixing tubes 120 and the second set of mixing tubes 130 can be arranged as circumferential rows of mixing tubes, with the first set of mixing tubes 120 radially outward of the second set of mixing tubes 130 (e.g., as an outer circle with longer mixing lengths and an inner circle with shorter mixing lengths).

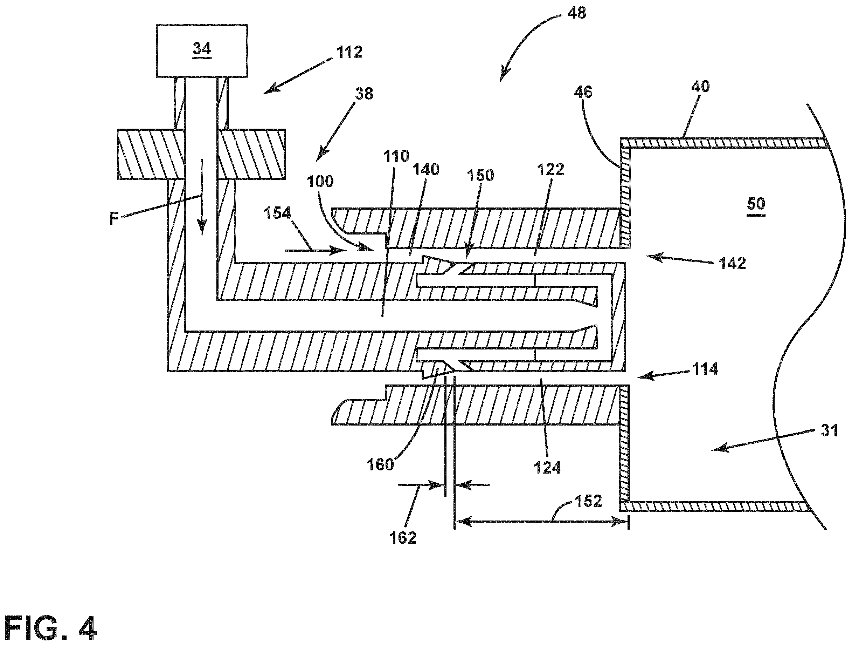

FIG. 4 illustrates the fuel nozzle assembly 48 of FIG. 3 along line IV-IV through the first mixing tube 122 and the second mixing tube 124, with the fuel nozzle assembly 48 coupled with the combustor liner 40, such as via the dome wall 46. In other configurations, the fuel nozzle assembly 48 can be coupled directly to the combustor liner 40. The fuel nozzle assembly 48 includes a fuel passage 110 that extends from a first end 112 of the fuel nozzle assembly 48 configured for fluid coupling with the fuel supply 34 toward a second end 114 of the fuel nozzle assembly 48 configured for coupling with the combustor liner 40, the dome wall 46, the combustion chamber 50, or combinations thereof.

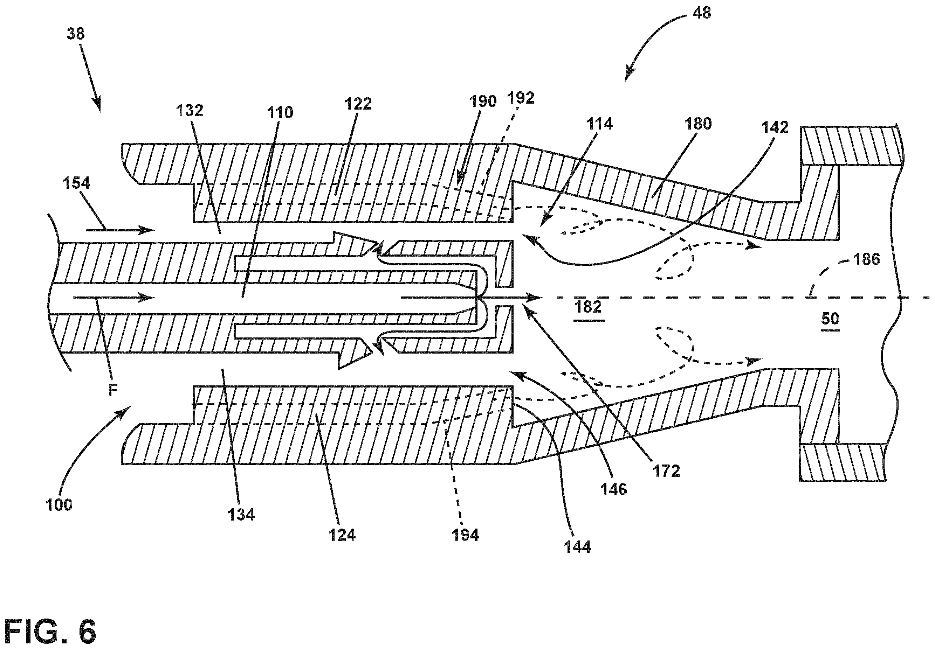

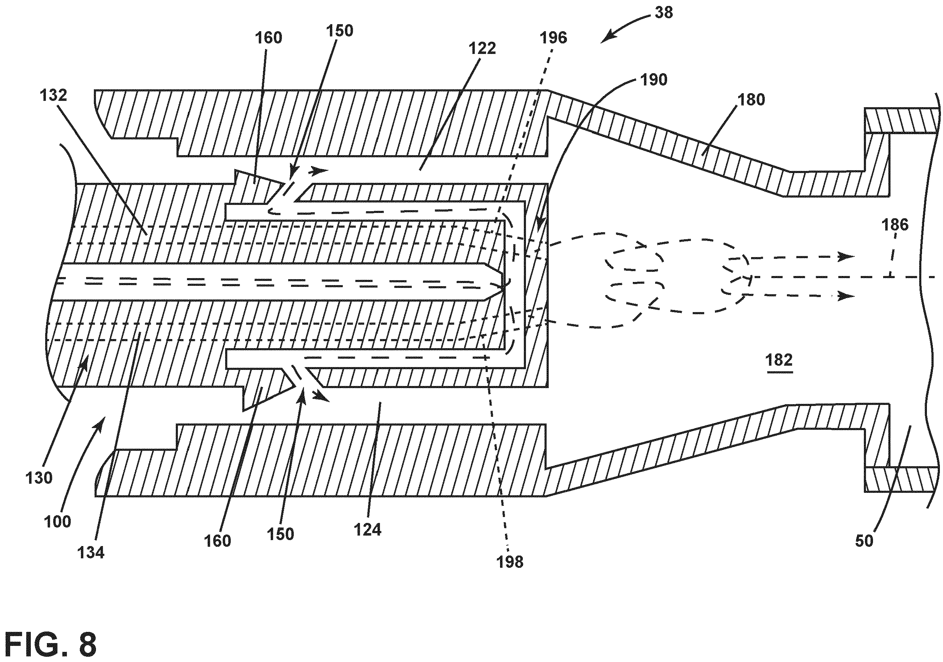

The plurality of mixing tubes 100 can include a respective air flow passage 140 that can extend at least partially through the fuel nozzle assembly 48 and terminate in the mixing tube outlet 142 that can be fluidly coupled with the combustion chamber 50. For example, with some configurations, the mixing tube outlets 142 can be disposed at the dome wall 46 and directly fluidly coupled with the combustion chamber 50, and, in other configurations (see, e.g., FIGS. 6 and 8), the mixing tube outlets 142 can be indirectly fluidly coupled with the combustion chamber 50. The air flow passage 140 can, for example, be configured as a tube having one or more cross-sectional shapes along its length.

The plurality of mixing tubes 100 can include a fuel orifice 150 (e.g., a gaseous fuel orifice) fluidly coupled to the air flow passage 140 and fluidly coupled with the fuel passage 110. Fuel F provided to the fuel nozzle assembly 48, such as from the fuel supply 34, flows through the fuel passage 110 to the fuel orifice 150 and into the air flow passage 140 where the fuel F can mix with air 154, such as compressed air from the compressor section 12 (FIG. 1). The fuel orifices 150 of the first set of mixing tubes 120 can be disposed at a distance from the mixing tube outlets 142, which can define a first mixing length 152 for the first set of mixing tubes 120.

The plurality of mixing tubes 100 can include one or more turbulators 160 that can be disposed at least partially upstream of the fuel orifices 150. The turbulators 160 can include protrusions that extend into the air flow passages 140 to generate turbulence in the air 154, which can facilitate mixing of the air 154 with the fuel F that enters the air flow passages 140 via the fuel orifices 150. The turbulators 160 can, for example, be immediately upstream of the fuel orifices 150. In some examples, one or more of the turbulators 160 are configured as vortex generators. Vortex generators can include one or more of a variety of configurations, such as counter-rotating, delta wing, double-sided wedge, wheeler, wing, winglet, Kuethe, wishbone, hairpin, lobed, wave-type, or any combination thereof.

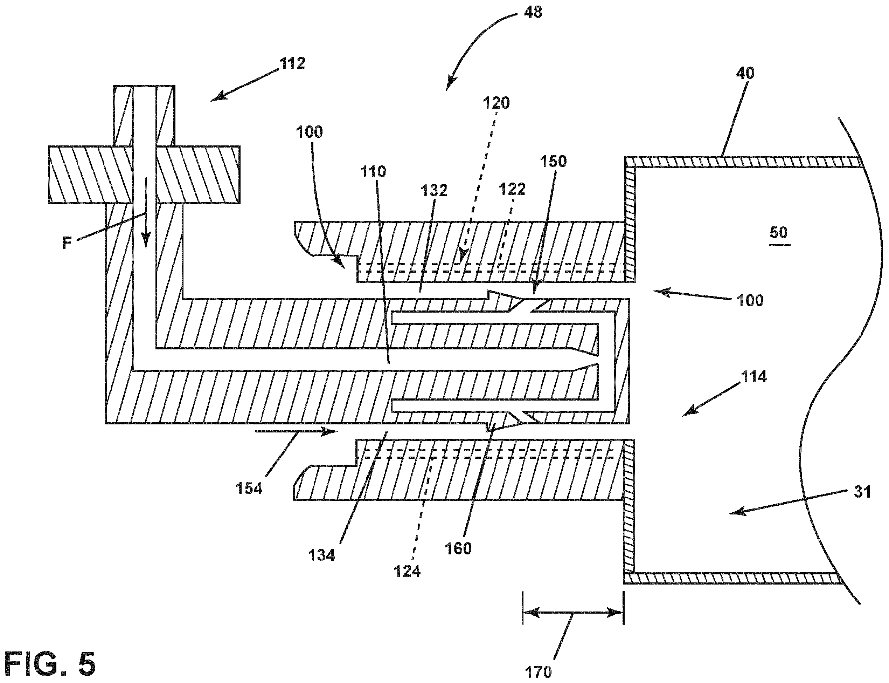

FIG. 5 illustrates the fuel nozzle assembly 48 of FIG. 3 along line V-V and through the third and fourth mixing tubes 132, 134 of the second set of mixing tubes 130. The fuel orifices 150 of the second set of mixing tubes 130 are axially offset from the fuel orifices 150 of the first set of mixing tubes 120 such that a second mixing length 170 of the second set of mixing tubes 130 is different from the first mixing length 152 (FIG. 4) of the first set of mixing tubes 120.

The difference between the first mixing length 152 and the second mixing length 170 can provide different fuel-air mixtures to the combustion chamber 50, which can help control flame stability, flame temperature, or both. For example, longer mixing lengths, such as the first mixing length 152, can allow for additional mixing and provide locally well-mixed and leaner mixtures that can limit flame temperatures and NOₓ generation, and shorter mixing lengths, such as the second mixing length 170, provide less time for mixing and provide fuel-air mixtures that are not as well mixed, which can provide locally richer fuel-air mixtures that can increase flame stability. In some examples, the plurality of mixing tubes 100, including the first set of mixing tubes 120 and the second set of mixing tubes 130, can be provided with the same amounts of fuel F and air 154, but the mixing tubes 100 with longer lengths can generate more uniform mixtures, which can reduce NOₓ emissions, and the mixing tubes 100 with shorter mixing lengths can generate pockets of richer fuel-air mixtures, which can provide better engine operability.

The second mixing length 170 can, with some examples, be in a range of 1% to 90%, inclusive of endpoints, of the first mixing length 152. The second mixing length 170 can, with some examples, be in a range of 20% to 80%, inclusive of endpoints, of the first mixing length 152. Additionally or alternatively, the second mixing length 170 can be 0.05 inches to 4 inches (0.127 cm to 10.2 cm), inclusive of endpoints, with some configurations. In some examples, the second mixing length 170 can be 0.3 inches to 2.0 inches (0.762 cm to 5.08 cm), inclusive of endpoints. The first set of mixing tubes 120, with the longer first mixing length 152, can be disposed radially outward of the second set of mixing tubes 130, with the shorter second mixing length 170. Such a configuration can provide leaner fuel-air mixtures at the wall of the combustion chamber 50 (e.g., at the combustor liner 40), which may reduce temperatures at the wall and reduce NOₓ emissions. Additionally or alternatively, such a configuration can provide richer fuel-air mixtures at the core of the combustion chamber 50, which can increase flame stability. The turbulators 160 of the second set of mixing tubes 130, such as of the third and fourth mixing tubes 132, 134, are axially offset, circumferentially offset, or both, from the turbulators 160 of the first set of mixing tubes 120 (FIG. 4).

Referring to FIG. 6, a variation of the fuel nozzle assembly 48 of FIG. 5 is illustrated with the fuel nozzle assembly 48 including a peripheral wall 180 extending from the second end 114 of the fuel nozzle assembly 48 and defining a nozzle mixing chamber 182 (e.g., a premixing chamber). The nozzle mixing chamber 182 is fluidly coupled with the mixing tube outlets 142 such that the fuel-air mixtures exiting the mixing tube outlets 142 mix together, at least to some degree, before flowing out of the fuel nozzle assembly 48 and into the combustion chamber 50. The nozzle mixing chamber 182 fluidly couples the mixing tube outlets 142 with the combustion chamber 50. The peripheral wall 180 can be angled (e.g., radially inward or outward), which may provide the nozzle mixing chamber 182 with a converging configuration, a diverging configuration, or a combination thereof.

In some examples, one or more of the plurality of mixing tubes 100 can include an angled portion 190 (e.g., an angled tube portion) that is angled relative to (e.g., not parallel with) the axial direction, the radial direction, the circumferential direction, or combinations thereof (e.g., relative to a centerline 186 of the fuel nozzle assembly 48). For example, the first mixing tube 122 and the second mixing tube 124 shown in FIG. 6 include angled portions 192, 194 that are angled radially inward and extend to the mixing tube outlets 144.

In some examples, the fuel nozzle assembly 48 can include a central fuel orifice 172 that is fluidly coupled with the fuel passage 110, the nozzle mixing chamber 182, the combustion chamber 50, or combinations thereof.

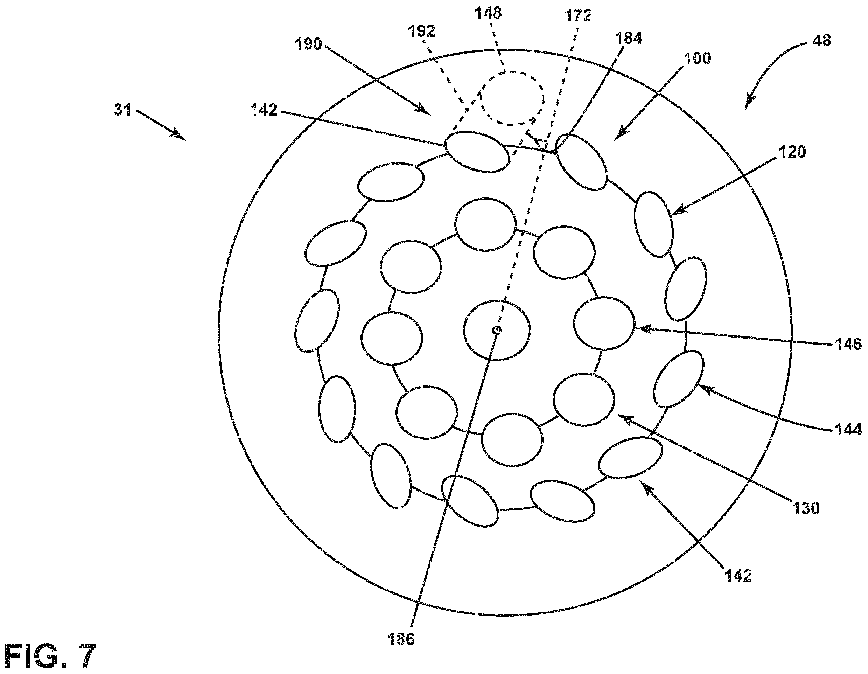

Referring to FIG. 7, a variation of the angled portions 190, such as the angled portion 192, can, additionally or alternatively, be angled at an angle 184 relative to the radial direction (e.g., not perpendicular to the circumferential direction and not parallel with an axial-radial plane) such that the mixing tube outlets 142 and mixing tube inlets 148 of the first set of mixing tubes 120 are radially and circumferentially offset from each other. Such a configuration may provide the angled portion 192 with a tangential orientation (e.g., not perpendicular to the circumferential direction), which may increase mixing of fuel-air mixtures in the nozzle mixing chamber 182 (FIG. 6), the combustion chamber 50 (FIG. 5), or both, which can provide leaner fuel-air mixtures. The angle 184 can, for example, be greater than 0 degrees and less than or equal to 70 degrees. A combination of axial mixing tubes (e.g., the second set of mixing tubes 130 in FIG. 7) and tangential mixing tubes (e.g., the first set of mixing tubes 120 in FIG. 7) can be provided to control fuel profiles in the combustion chamber 50 with lower NOₓ emissions and better operability (e.g., better flame stability).

Referring to FIG. 8, one or more of the second set of mixing tubes 130 can include the angled portions 190. For example, the third and fourth mixing tubes 132, 134 can include angled portions 196, 198 that are angled relative to the axial direction, the radial direction, the circumferential direction, or combinations thereof. With some configurations, the angled portions 196, 198 can be angled toward each other, at least to some degree, which can cause or facilitate mixing of the fuel-air mixtures exiting the third and fourth mixing tubes 132, 134, such as in the nozzle mixing chamber 182, the combustion chamber 50, or a combination thereof.

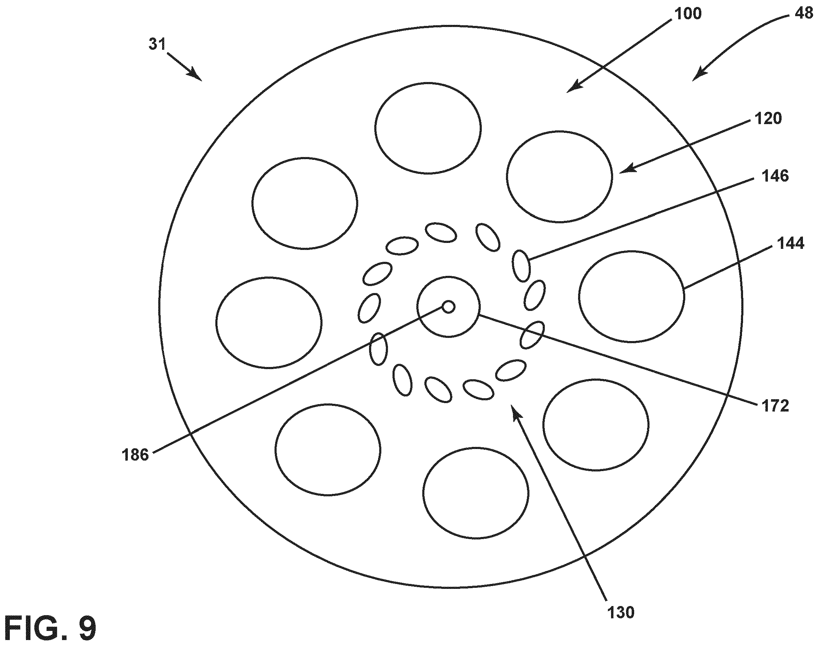

Referring to FIG. 9, examples of the mixing tube outlets 144 of the first set of mixing tubes 120 and the mixing tube outlets 146 of the second set of mixing tubes 130 are illustrated. The mixing tube outlets 144, 146 of the sets of mixing tubes 120, 130, respectively, can have the same or different configurations. For example, the mixing tube outlets 144 can be disposed radially outward of the mixing tube outlets 146, can have greater hydraulic diameters than the mixing tube outlets 146, or both. Additionally or alternatively, the mixing tube outlets 146 of the second set of mixing tubes 130 can be elongated in a direction that is not parallel with the circumferential direction, which may facilitate mixing of the fuel-air mixtures exiting the second set of mixing tubes 130, such as in the nozzle mixing chamber 182, the combustion chamber 50, or both.

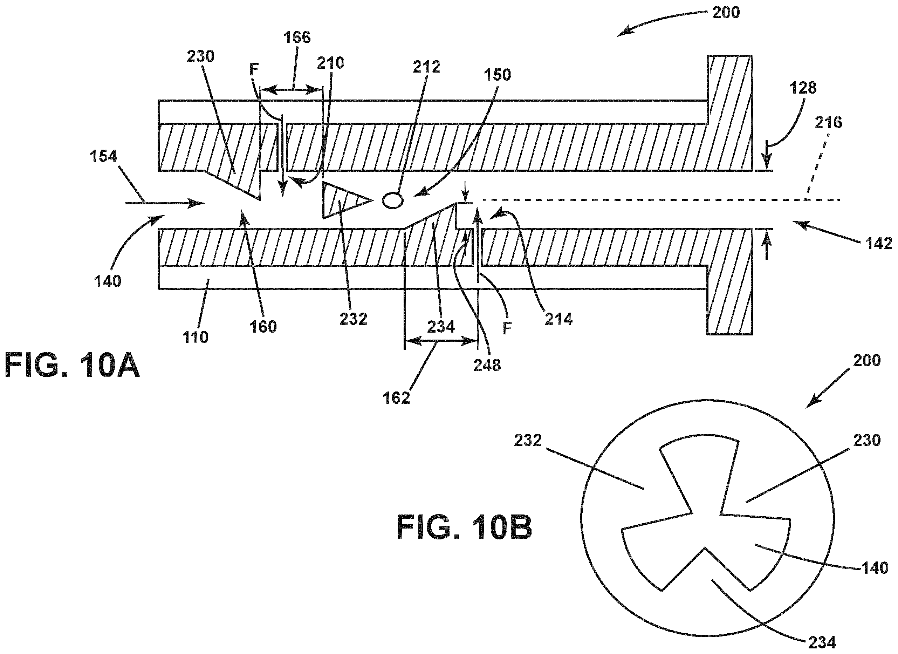

Referring to FIG. 10A, a cross-sectional view of an example mixing tube 200 of the plurality of mixing tubes 100 (FIG. 3) is shown. The mixing tube 200 can be included, for example, in the first set of mixing tubes 120 (FIG. 3), the second set of mixing tubes 130 (FIG. 3), or both. The mixing tube 200 includes the turbulators 160, such as a first turbulator 230, a second turbulator 232, a third turbulator 234, or a combination thereof (e.g., a first turbulator and one or more additional turbulators). The turbulators 230-234 can be offset from each other, such as axially, circumferentially, or both, relative to a mixing tube centerline 216 of the mixing tube 200. The fuel orifice 150 can include a first fuel orifice 210, a second fuel orifice 212, and a third fuel orifice 214 fluidly coupled with the air flow passage 140 (e.g., a first gaseous fuel orifice and one or more additional gaseous fuel orifices). The first fuel orifice 210 can be disposed proximate the first turbulator 230. The second fuel orifice 212 can be disposed proximate the second turbulator 232. The third fuel orifice 214 can be disposed proximate the third turbulator 234. For example, the fuel orifices 210-214 can be disposed at least partially downstream of the turbulators 230-234, respectively.

The diameter 128 of the mixing tubes 120 at the mixing tube outlet 142 can, in some examples, be equal to or between 0.05 inches to 2 inches (0.127 cm to 5.1 cm). A height 248 of the turbulators 160 (e.g., perpendicular to the axial direction), such as the turbulators 230-234, can, in some examples, be 5% to 80% (e.g., 10% to 80%), inclusive of end points, of the diameter 128. The height 248 can be the same or vary between the turbulators 160. For example, the shortest turbulator 160 can have a height that is 20% to 100%, inclusive of endpoints, of the tallest turbulator 160. With some configurations, the height 248 of the turbulators 160 can vary according to the axial position of the turbulator 160. For example, the first turbulator 230 can be shorter than the second turbulator 232, which can be shorter than the third turbulator 234. Alternatively, the first turbulator 230 can be taller than the second turbulator 232, which can be taller than the third turbulator 234. An axial distance 162 can be measured from centers of the fuel orifices 150 to forward ends of the turbulators 160. A ratio of the axial distance 162 to the height 248 can, for example, be 0.1 to 8, inclusive of endpoints. A ratio of an axial distance 166 between a pair of turbulators 160 to the height 248 can, for example, be 1 to 10, inclusive of endpoints. While the mixing tube 200 is shown with a linear configuration, the mixing tube 200 can include other configurations, such as configurations including one or more angled portions 190 (FIGS. 6 and 8), curved portions, undulating portions, or any combinations thereof. In some examples, the plurality of mixing tubes 100 can include non-helical configurations.

FIG. 10B illustrates the turbulators 230-234 circumferentially offset from each other. In some examples, the turbulators 230-234 can be equally or unequally circumferentially spaced from each other.

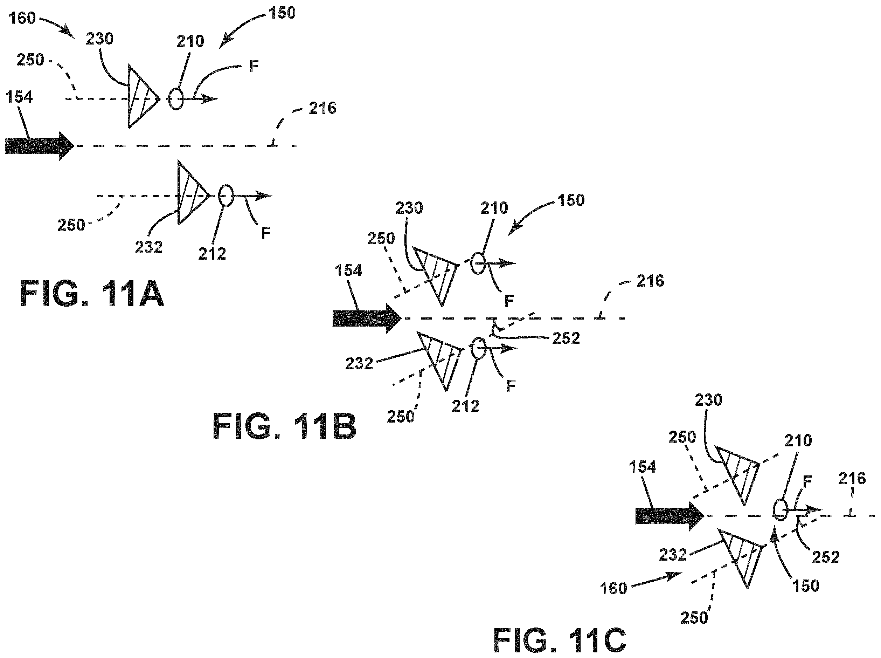

Referring to FIGS. 11A-11C, the fuel orifices 150 and the turbulators 160 can be disposed in a variety of configurations. The turbulators 160 can, for example, include triangular configurations with centerlines 250. The centerlines 250 can bisect the turbulators 160, extend through the intersection of two legs of the triangular shape, or both. One or more turbulators 160, such as the turbulators 230, 232 can be disposed such that the centerlines 250 are parallel with the axial direction, the mixing tube centerline 216, or both (FIG. 11A). Alternatively, one or more turbulators 160 can be disposed such that the centerlines 250 are disposed at an angle 252 relative to the mixing tube centerline 216 (FIGS. 11B and 11C), such as to generate tangential velocity for the fluid in the mixing tube 100 (e.g., air 154, fuel F, and mixtures thereof). The angle 252 can, for example, be greater than 0 degrees and less than or equal to 60 degrees. The fuel orifice 150 can include an orifice for each turbulator 160, such as first and second fuel orifices 210, 212 for the first and second turbulators 230, 232, and the first and second fuel orifices 210, 212 can be at least partially aligned (e.g., circumferentially) with the turbulators 230, 232, the centerlines 250 thereof, or both (FIGS. 11A and 11B). Additionally or alternatively, the fuel orifice 150 can include a single fuel orifice offset from the centerlines 250 of the first and second turbulators 230, 232 (FIG. 11C). A combination of fuel orifices 150 directly aft of a turbulator 160 can increase penetration. Fuel orifices 150 between turbulators 160 can keep fuel F closer to the wall of the combustion chamber 50 (e.g., closer to the combustor liner 40). A combination of fuel orifices 150 directly aft and between turbulators 160 can distribute fuel F in the core of the combustion chamber 50 and near the wall of combustion chamber 50, which can provide better mixing and lower NOₓ emissions.

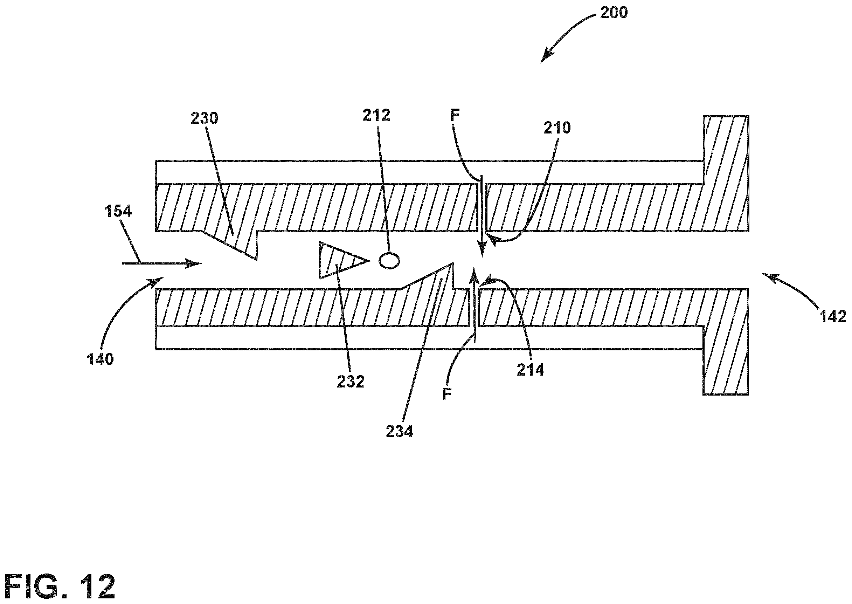

Referring to FIG. 12, the first and third fuel orifices 210, 214 can be axially offset from each other and downstream of the third turbulator 234, which is shown downstream of the second turbulator 232, which is shown downstream of the first turbulator 230. Alternatively, the first and third fuel orifices 210, 214 can be at least partially axially aligned. The second fuel orifice 212 can be disposed at least partially between the axial positions of the second and third turbulators 232, 234.

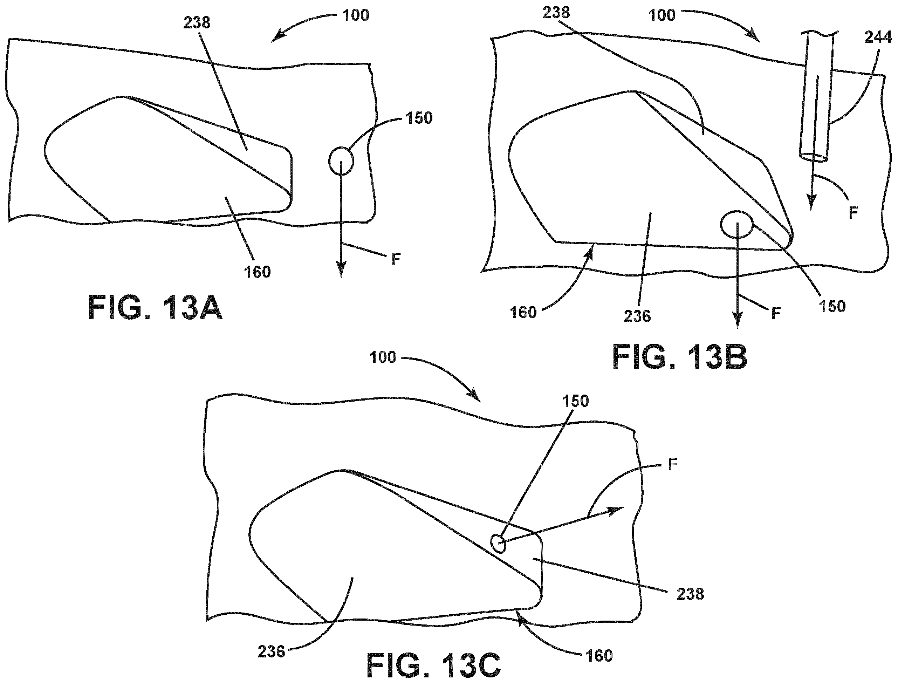

Referring to FIGS. 13A-13C, the fuel orifice 150 can be disposed in a variety of locations relative to the turbulators 160. Referring to FIG. 13A, the fuel orifice 150 can be disposed in the mixing tube 100 downstream of the turbulator 160. Referring to FIG. 13B, the fuel orifice 150 can be disposed at a radial surface 236 of the turbulator 160 that generally faces radially inward toward the center of the mixing tube 100, such as to facilitate mixing of the air 154 and the fuel F. The mixing tube 100 can include an additional fuel orifice 244 downstream of the turbulator 160 and downstream of the fuel orifice 150. Referring to FIG. 13C, the fuel orifice 150 can be disposed at a side wall 238 of the turbulator 160, which may spread flow laterally. As shown in FIGS. 13B and 13C, the turbulator 160 can include at least a portion of the fuel orifice 150. The fuel orifice 150 can be disposed aft of the forward end of the turbulator 160 such that the turbulator 160 is at least partially upstream of the fuel orifice 150 and the fuel orifice 150 is downstream of at least a portion of the turbulator 160.

Some mixing tubes 100 can include turbulators 160 having combinations of the configurations shown in FIGS. 13A-13C.

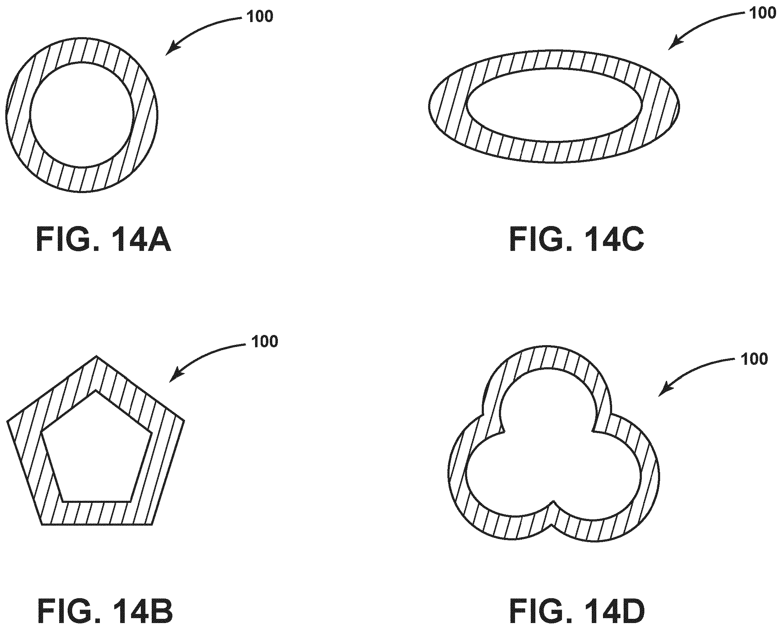

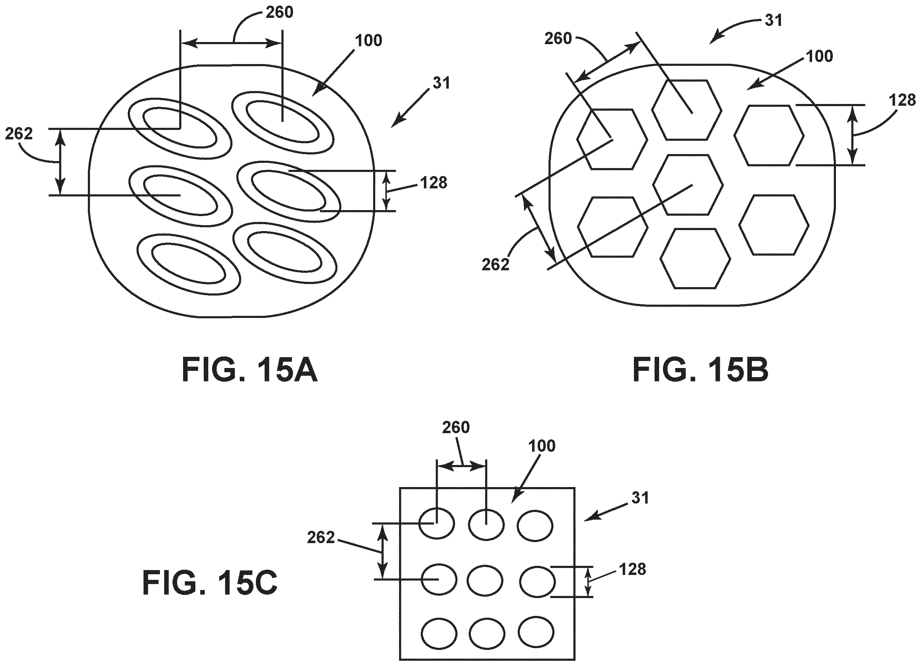

Referring to FIGS. 14A-14D, the mixing tubes 100 can include a variety of cross-sectional shapes, which can vary along lengths of the mixing tubes 100 and between the mixing tubes 100 of the same combustor section 31 (FIG. 2) and between combustor sections 31 (FIG. 2). In some configurations, the cross-sectional shapes and sizes can vary to provide the mixing tubes 100 with radial undulations along the axial direction. The cross-sectional shapes can, for example, include circular (FIG. 14A), polygonal (FIG. 14B) oval-shaped or elliptical (FIG. 14C), combined shapes (FIG. 14D), such as three overlapping circles, or hexagonal (FIG. 15B). The mixing tubes 100 of a particular combustor section 31 can have the same or different cross-sectional shapes. The mixing tubes 100 of different combustor sections 31 can have the same or different cross-sectional shapes. A hexagonal cross-sectional shape can, for example, facilitate providing a maximum number of mixing tubes 100 to a particular area of the combustor section 31. An elongated cross-sectional shape at the mixing tube outlet 142, at the dome wall 46, or both, can spread the fuel-air mixture to reduce regions of recirculation, reduce residence time, or both, which can reduce NOₓ emission.

While the plurality of mixing tubes 100 are generally illustrated in circular arrangements with radial and circumferential spacing (FIG. 3), the plurality of mixing tubes 100 can be disposed in other arrangements, such as generally illustrated in FIGS. 15A-15C. The arrangement of the mixing tubes 100 can, for example, include a parallelogram (FIG. 15A), hexagonal (FIG. 15B), rectangular (FIG. 15C), square, triangular, among others, and combinations thereof. The mixing tubes 100 can be spaced in a vertical direction, a horizontal direction, a transverse direction, or a combination thereof. The mixing tubes 100 in a row can, for example, be spaced, center-to-center, by a distance 260 that can be 50% to 500%, inclusive of endpoints, of the diameter 128. The mixing tubes 100 in adjacent rows can, for example, be spaced, center-to-center, by a distance 262 that can be 50% to 500%, inclusive of endpoints, of the diameter 128. The mixing tubes 100 of a particular combustor section 31 can have a single or multiple arrangements. The mixing tubes 100 of different combustor sections 31 can have the same or different arrangements. For example, one combustor section 31 can include a circular arrangement of the mixing tubes 100 (FIG. 3) and another combustor section 31 of the same combustor 30 can include a hexagonal arrangement of the mixing tubes 100 (FIG. 15B).

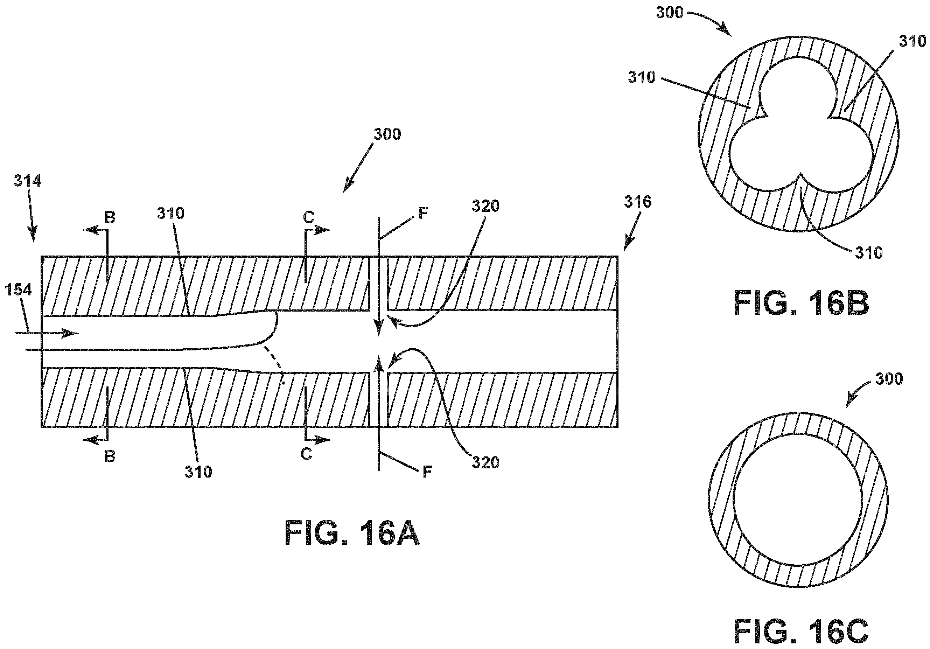

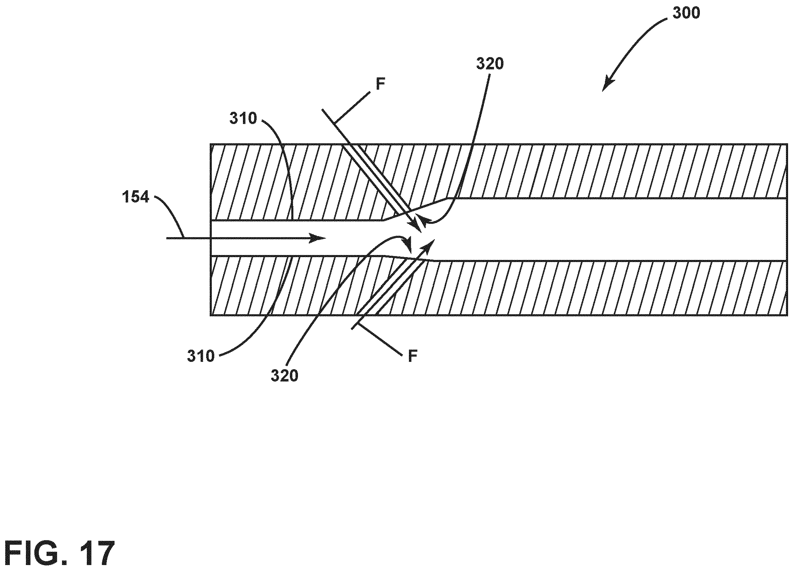

Referring to FIGS. 16A and 16B, a mixing tube 300, which can be used as one or more of the mixing tubes 100 of FIG. 3, can include one or more lobes 310 extending into the mixing tube 300. The lobes 310 can extend from a first end 314 of the mixing tube 300 toward a mixing tube outlet 316 of the mixing tube 300. The lobes 310 can taper outward such that the cross-section of the mixing tube 300 transitions from a smaller, non-circular shape shown in FIG. 16B, taken along line B-B of FIG. 16A, to the circular shape shown in FIG. 16C, taken along line C-C of FIG. 16C. The lobes 310 can create high turbulence in the mixing tube 300 to facilitate mixing of the air 154 and the fuel F. The mixing tube 300 can include one or more fuel orifices 320 downstream of the lobes 310 (e.g., one or more lobes 310 can be at least partially upstream of one or more fuel orifices 320). Additionally or alternatively, referring to FIG. 17, one or more lobes 310 can include one or more of the fuel orifices 320, which can include the one or more fuel orifices 320 being disposed at the surface of the one or more lobes 310. The fuel orifices 320 can be at peaks or troughs of the lobes 310 and can be offset from each other radially, axially, circumferentially, or combinations thereof, along the surface of the lobes 310. While three lobes 310 are illustrated, the mixing tube 300 can have other numbers of lobes 310.

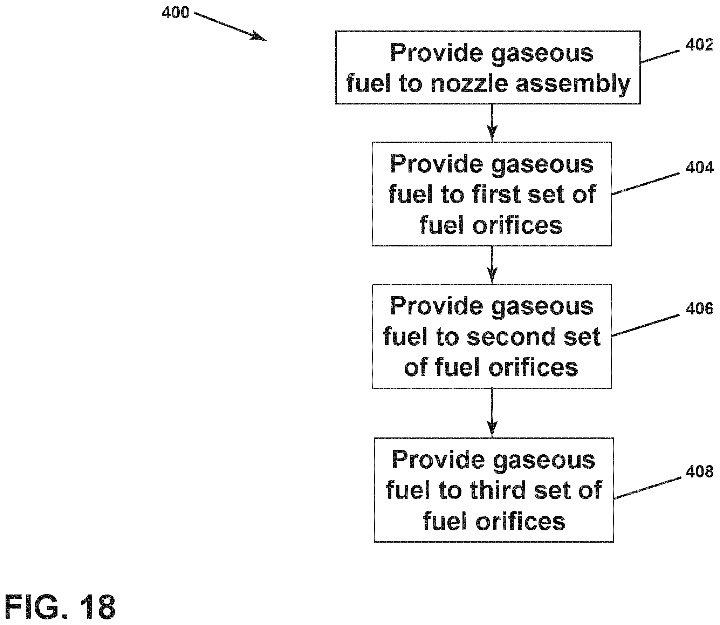

Referring to FIG. 18, a method 400 of operating a gas turbine engine is illustrated. The method 400 can be utilized with the turbine engine 10 and components thereof, such as generally illustrated in FIGS. 1-17. The method 400 can include providing fuel F (e.g., gaseous fuel, such as hydrogen fuel) to the fuel nozzle assembly 48 (block 402). The method 400 can include providing fuel F to a first set of the fuel orifices 150, which can, for example, include the first fuel orifice 210 (block 404). The method 400 can include providing fuel F to a second set of the fuel orifices 150, which can, for example, include the second fuel orifice 212 (block 406). The method 400 can include providing fuel F to a third set of the fuel orifices 150, which can, for example, include the third fuel orifice 214 (block 408). The method 400 can, for example, be implemented, at least in part by the controller 60. The controller 60 can control the fuel supply 34, the fuel nozzle assembly 48, or both, to selectively provide fuel F (e.g., gaseous fuel) to the first fuel orifice 210 (block 402), the second fuel orifice 212 (block 404), the third fuel orifice 214 (block 406), and combinations thereof. Selectively providing the fuel F to the orifices 210-214 can include providing the fuel F according to a status of the turbine engine 10. For example, the controller 60 may cause fuel F, or relatively more fuel F, to be provided to fuel orifices 150 farther from the mixing tube outlets 142 (e.g., the first fuel orifice 210) when the turbine engine 10 is operating at a cruising speed, such as to limit NOₓ emissions. Additionally or alternatively, the controller 60 may cause fuel F, or relatively more fuel F, to be provided to the fuel orifices 150 closer to the mixing tube outlets 142 (e.g., the third fuel orifice 214) when the turbine engine 10 is accelerating, such as to provide greater flame stability. The controller 60 can, for example, control the amount, pressure, or both, of fuel F via a control valve, other methods, or combinations thereof. While block 408 is shown after block 406, which is shown after block 404, the method 400 can proceed directly from block 402 to any or all of blocks 404-408. For example, in some configurations, the method 400 may proceed from block 402 to block 406 without conducting block 404 or block 408, any may proceed from block 402 to block 408 without conducting block 404 or block 406. In some examples, the method 400 may proceed from block 402 directly to all of blocks 404-408 (e.g., provide fuel to the first, second, and third fuel orifices 210, 212, 214 simultaneously. In some examples, the method 400 can include the controller 60 controlling fuel flow in the fuel nozzle assembly 48, including fuel flow to various fuel orifices thereof, and controlling fuel flow in one or more other fuel nozzle assemblies of the combustor 30 (FIG. 2), such as to improve flame stability and engine operability.

A mixing tube 100, 200, 300 having multiple fuel orifices 150 axially offset from each other can effectively provide the mixing tube 100, 200, 300 with variable mixing lengths. For example, if fuel F is provided to an upstream one of the fuel orifices 150 of the mixing tube 100, 200, 300, the mixing tube 100, 200, 300 can have a relatively longer effective mixing length. If fuel F is provided to a downstream one of the fuel orifices 150 of the same mixing tube 100, 200, 300, the mixing tube 100, 200, 300 can have a relatively shorter effective mixing length.

Fuel orifices, such as fuel orifices 150, 320, can have various dimensions and numbers. For example, smaller orifices or fewer can be disposed closer to the combustion chamber 50 and larger orifices or more orifices can be disposed farther from the combustion chamber 50 to reduce NOx emissions. Additionally or alternatively, larger orifices or more orifices can be disposed closer to the combustion chamber 50 and smaller orifices or fewer orifices can be disposed farther from the combustion chamber 50 to increase flame stability.

With some aspects, the disclosed combustors and fuel nozzles can be utilized with gaseous fuel, such as hydrogen. Gaseous fuel, including hydrogen, spreads/disperses at a faster rate than atomized liquid fuel, which can involve less mixing time for the gaseous fuel, fuel mixing tube lengths can be shorter, and the flame from the gaseous fuel may be more likely to spread farther and faster, which can increase the risk of blowout and increase the impact of controlling the flame and limiting flame spread by controlling the dispersion of the gaseous fuel.

Many other possible aspects and configurations in addition to those shown in the above figures are contemplated by the present disclosure. For example, the disclosed fuel nozzle assemblies can provide greater flame stability, lower flame temperatures, and lower NOₓ emissions relative to other designs.

Sets of mixing tubes with different mixing lengths can create fully mixed or partially mixed fuel-air mixture to balance NOₓ emission and flame stability. Mixing tubes having shorter mixing lengths, which can be arranged as one or more inner circles of mixing tubes, can create rich pockets of fuel-air mixtures for better flame stability. Mixing tubes having longer mixing lengths, which can be arranged as one or more outer circles of mixing tubes, can allow for increased mixing and create more uniform fuel-air mixtures for lower NOₓ emissions. Turbulators that extend into the air flow passages of the mixing tubes are introduced before fuel orifices to create turbulence for improving mixing of the fuel and air. The mixing tubes can be arranged in rows, and the sizes of the mixing tubes between rows or within each row can be different to create different fuel-air mixing distribution at the dome wall and within the combustion chamber. Lobes introduced at the mixing tube inlet can gradually transition into a circular cross section and can create high turbulence. Fuel can be injected downstream of the lobes, such as into a circular section of the mixing tube, to facilitate mixing of the fuel with the turbulent air flow provided by the lobes. Combinations of tangential mixing tubes and axial mixing tubes can be provided to control fuel profiles at the exit of the fuel nozzle assembly to provide lower NOₓ and more stable operation. Increasing the number of tangential mixing tubes and increasing the angle of the tangential mixing tubes can achieve better fuel-air mixing within the mixing chamber. This better mixing can be balanced with other mixing tubes having shorter mixing lengths provide better flame stability. Vortex generators can be inclined at an angle relative to an axis of the mixing tube to create tangential velocity near the combustor wall.

The disclosed fuel nozzle assemblies can utilize a plurality of relatively smaller mixing tubes that provide a plurality of shorter and more compact flames, as opposed to a single larger mixing tube that would generate a longer flame, which can allow for the axial length of the combustor to be shorter.

While described with respect to a turbine engine, it should be appreciated that the combustor as described herein can be for any engine with a having a combustor. It should be appreciated that application of aspects of the disclosure discussed herein are applicable to engines with propeller sections or fan and booster sections along with turbojets and turbo engines as well.

To the extent not already described, the different features and structures of the various embodiments can be used in combination, or in substitution with each other as desired. That one feature is not illustrated in all the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure. For example, and without limitation, combustors and combustor sections can include various combinations of mixing tubes. In some examples, the same combustor or combustor section can include mixing tubes with any combination of the configurations illustrated in FIGS. 4-10B, 12, 14A-14D, 15A-15C,16A-16C, and 17. Additionally or alternatively, a particular mixing tube can include turbulators have different configurations, such as any combination of the turbulators shown in FIGS. 11A-11C and 13A-13C.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
A gas turbine engine, comprising: a compressor section, a combustion section, and a turbine section in serial flow arrangement, with the combustion section comprising: a combustion liner at least partially defining a combustion chamber; and a gaseous fuel nozzle assembly comprising a plurality of mixing tubes, with the plurality of mixing tubes having: an air flow passage terminating in a mixing tube outlet fluidly coupled to the combustion chamber, a gaseous fuel orifice fluidly coupled to the air flow passage, and a turbulator disposed at least partially upstream of the gaseous fuel orifice; wherein a distance between the gaseous fuel orifice and the mixing tube outlet defines a mixing length, wherein a first mixing tube of the plurality of mixing tubes has a first mixing length and a second mixing tube of the plurality of mixing tubes has a second mixing length, which is different from the first mixing length, and wherein the first mixing tube and the second mixing tube are radially offset.

The gas turbine engine of preceding clause, wherein the plurality of mixing tubes are arranged in sets, including a first set of mixing tubes and a second set of mixing tubes, with respect to a centerline of the gaseous fuel nozzle assembly, with the first set of mixing tubes being radially closer to the centerline than the second set of mixing tubes, wherein the first set of mixing tubes has the first mixing length, the second set of mixing tubes has the second mixing length, and the first mixing length is longer than the second mixing length.

The gas turbine engine of preceding clause, wherein the second mixing length is in a range of 1% and 90% of the first mixing length, inclusive of endpoints.

The gas turbine engine of preceding clause, wherein the first set of mixing tubes and the second set of mixing tubes are arranged as circumferential rows of mixing tubes.

The gas turbine engine of preceding clause, wherein the gaseous fuel orifice is disposed at a surface of the turbulator.

The gas turbine engine of preceding clause, wherein the gaseous fuel orifice is disposed at a radial surface of the turbulator.

The gas turbine engine of preceding clause, wherein the gaseous fuel orifice is disposed at a side wall of the turbulator.

The gas turbine engine of preceding clause, wherein the gaseous fuel orifice is at least partially circumferentially aligned with the turbulator.

The gas turbine engine of preceding clause, wherein the turbulator of the first mixing tube of the plurality of mixing tubes is axially offset from the turbulator of the second mixing tube of the plurality of mixing tubes.

The gas turbine engine of preceding clause, wherein an additional turbulator is disposed in the first mixing tube of the plurality of mixing tubes axially and circumferentially offset from the turbulator.

The gas turbine engine of preceding clause, wherein the first mixing tube of the plurality of mixing tubes includes an additional gaseous fuel orifice at least partially downstream of the additional turbulator.

The gas turbine engine of preceding clause, comprising a second additional turbulator disposed in the first mixing tube of the plurality of mixing tubes axially and circumferentially offset from the turbulator and the additional turbulator.

The gas turbine engine of preceding clause, wherein the first mixing tube of the plurality of mixing tubes includes a second additional gaseous fuel orifice at least partially downstream of the second additional turbulator.

The gas turbine engine of preceding clause, wherein the first mixing tube of the plurality of mixing tubes includes a plurality of lobes disposed at least partially upstream of the gaseous fuel orifice.

The gas turbine engine of preceding clause, wherein a lobe of the plurality of lobes includes the gaseous fuel orifice of the first mixing tube of the plurality of mixing tubes.

The gas turbine engine of preceding clause, wherein the mixing tube outlet of the first mixing tube of the plurality of mixing tubes includes a circular, elliptical, or polygonal cross-sectional shape.

The gas turbine engine of preceding clause, further including a nozzle mixing chamber disposed at and fluidly coupled with the mixing tube outlets of the plurality of mixing tubes, the nozzle mixing chamber having a converging configuration and fluidly coupling the mixing tube outlets of the plurality of mixing tubes with the combustion chamber.

The gas turbine engine of preceding clause, wherein a first mixing tube of the plurality of mixing tubes includes a first tube portion having a tangential orientation.

The gas turbine engine of any preceding clause, wherein the plurality of mixing tubes are disposed in a parallelogram arrangement.

The gas turbine engine of any preceding clause, wherein the plurality of mixing tubes are disposed in a hexagonal arrangement.

The gas turbine engine of any preceding clause, wherein the plurality of mixing tubes are disposed in a rectangular arrangement.

The gas turbine engine of any preceding clause, wherein the plurality of mixing tubes are disposed in a circular arrangement.

A gas turbine engine, comprising: a compressor section, a combustion section, and a turbine section in serial flow arrangement, with the combustion section comprising: a combustion liner at least partially defining a combustion chamber; and a fuel nozzle assembly comprising a plurality of mixing tubes, with the plurality of mixing tubes having: an air flow passage terminating in a mixing tube outlet fluidly coupled to the combustion chamber, a first gaseous fuel orifice fluidly coupled to the air flow passage, a second gaseous fuel orifice fluidly coupled to the air flow passage, a first turbulator disposed in the air flow passage upstream of the first gaseous fuel orifice to facilitate mixing at the first gaseous fuel orifice, and a second turbulator disposed in the air flow passage upstream of the second gaseous fuel orifice to facilitate mixing at the second gaseous fuel orifice; wherein the first gaseous fuel orifice is axially offset from the second gaseous fuel orifice such that the plurality of mixing tubes have variable mixing lengths.

The gas turbine engine of preceding clause, wherein the plurality of mixing tubes have a third gaseous fuel orifice fluidly coupled with the air flow passage, and a third turbulator disposed in the air flow passage upstream of the third gaseous fuel orifice; wherein the first gaseous fuel orifice, the second gaseous fuel orifice, and the third gaseous fuel orifice are axially and circumferentially offset; wherein the first turbulator, the second turbulator, and the third turbulator are axially and circumferentially offset; wherein the first turbulator is at least partially axially aligned with the first gaseous fuel orifice; wherein the second turbulator is at least partially axially aligned with the second gaseous fuel orifice; and wherein the third turbulator is at least partially axially aligned with the third gaseous fuel orifice.

A method of operating the gas turbine engine of preceding clause, the method comprising selectively providing gaseous fuel to the first gaseous fuel orifice, the second gaseous fuel orifice, the third gaseous fuel orifice, or a combination thereof, according to a status of the gas turbine engine.

The method of preceding clause, wherein selectively providing gaseous fuel includes providing gaseous fuel to the first gaseous fuel orifice when the gas turbine engine is operating at a cruising speed and providing gaseous fuel to the third gaseous fuel orifice when the gas turbine engine is accelerating.

A gaseous fuel nozzle assembly for a gas turbine engine, the gaseous fuel nozzle comprising: a plurality of mixing tubes including: an air flow passage terminating in a mixing tube outlet, a gaseous fuel orifice fluidly coupled to the air flow passage, and a turbulator disposed at least partially upstream of the gaseous fuel orifice; wherein a distance between the gaseous fuel orifice and the mixing tube outlet defines a mixing length, wherein a first mixing tube of the plurality of mixing tubes has a first mixing length and a second mixing tube of the plurality of mixing tubes has a second mixing length, which is different from the first mixing length, and wherein the first mixing tube and the second mixing tube are radially offset.

The gaseous fuel nozzle assembly of any preceding clause, wherein the plurality of mixing tubes are arranged in sets, including a first set of mixing tubes and a second set of mixing tubes, with respect to a centerline of the gaseous fuel nozzle assembly, with the first set of mixing tubes being radially closer to the centerline than the second set of mixing tubes, wherein the first set of mixing tubes has the first mixing length, the second set of mixing tubes has the second mixing length, and the first mixing length is longer than the second mixing length.

The gaseous fuel nozzle assembly of any preceding clause, wherein the second mixing length is in a range of 1% and 90% of the first mixing length, inclusive of endpoints.

The gaseous fuel nozzle assembly of any preceding clause, wherein the first set of mixing tubes and the second set of mixing tubes are arranged as circumferential rows of mixing tubes.

The gaseous fuel nozzle assembly of any preceding clause, wherein the gaseous fuel orifice is disposed at a surface of the turbulator.

The gaseous fuel nozzle assembly of any preceding clause, wherein the gaseous fuel orifice is at least partially circumferentially aligned with the turbulator.

The gaseous fuel nozzle assembly of any preceding clause, wherein the turbulator of the first mixing tube of the plurality of mixing tubes is axially offset from the turbulator of the second mixing tube of the plurality of mixing tubes.

The gaseous fuel nozzle assembly of any preceding clause, wherein an additional turbulator is disposed in the first mixing tube of the plurality of mixing tubes axially and circumferentially offset from the turbulator.

The gaseous fuel nozzle assembly of any preceding clause, wherein the first mixing tube of the plurality of mixing tubes includes an additional gaseous fuel orifice at least partially downstream of the additional turbulator.

The gaseous fuel nozzle assembly of any preceding clause, comprising a second additional turbulator disposed in the first mixing tube of the plurality of mixing tubes axially and circumferentially offset from the turbulator and the additional turbulator.

The gaseous fuel nozzle assembly of any preceding clause, wherein the first mixing tube of the plurality of mixing tubes includes a second additional gaseous fuel orifice at least partially downstream of the second additional turbulator.

The gaseous fuel nozzle assembly of any preceding clause, wherein the first mixing tube of the plurality of mixing tubes includes a plurality of lobes disposed at least partially upstream of the gaseous fuel orifice.

The gaseous fuel nozzle assembly of any preceding clause, wherein a lobe of the plurality of lobes includes the gaseous fuel orifice of the first mixing tube of the plurality of mixing tubes.

The gaseous fuel nozzle assembly of any preceding clause, wherein the mixing tube outlet of the first mixing tube of the plurality of mixing tubes includes a circular, elliptical, or polygonal cross-sectional shape.

The gaseous fuel nozzle assembly of any preceding clause, further including a nozzle mixing chamber disposed at and fluidly coupled with the mixing tube outlets of the plurality of mixing tubes.

The gaseous fuel nozzle assembly of any preceding clause, wherein a first mixing tube of the plurality of mixing tubes includes a first tube portion having a tangential orientation.

## Claims

1. A gas turbine engine (10), comprising:
a compressor section (12), a combustion section (14), and a turbine section (16) in serial flow arrangement, with the combustion section (14) comprising:
a combustion liner at least partially defining a combustion chamber (50); and
a gaseous fuel nozzle assembly (48) comprising a plurality of mixing tubes (100, 200, 300), with the plurality of mixing tubes (100, 200, 300) having:
an air flow passage (140) terminating in a mixing tube outlet (142) fluidly coupled to the combustion chamber (50),
a gaseous fuel orifice (150) fluidly coupled to the air flow passage (140), and
a turbulator (160) disposed at least partially upstream of the gaseous fuel orifice (150);
wherein a distance between the gaseous fuel orifice (150) and the mixing tube outlet (142) defines a mixing length, wherein a first mixing tube (122) of the plurality of mixing tubes (100, 200, 300) has a first mixing length (152) and a second mixing tube (124) of the plurality of mixing tubes (100, 200, 300) has a second mixing length (170), which is different from the first mixing length (152), and wherein the first mixing tube (122) and the second mixing tube (124) are radially offset.

2. The gas turbine engine (10) of claim 1, wherein the plurality of mixing tubes (100, 200, 300) are arranged in sets, including a first set of mixing tubes (120) and a second set of mixing tubes (130), with respect to a centerline of the gaseous fuel nozzle assembly (186), with the first set of mixing tubes (120) being radially closer to the centerline (186) than the second set of mixing tubes (130), wherein the first set of mixing tubes (120) has the first mixing length (152), the second set of mixing tubes (130) has the second mixing length (170), and the first mixing length (152) is longer than the second mixing length (170).

3. The gas turbine engine (10) of claim 2, wherein the second mixing length (170) is in a range of 1% and 90% of the first mixing length (152), inclusive of endpoints.

4. The gas turbine engine (10) according to claim 2 or 3, wherein the first set of mixing tubes (120) and the second set of mixing tubes (130) are arranged as circumferential rows of mixing tubes.

5. The gas turbine engine (10) according to any one of claims 1 to 4, wherein the gaseous fuel orifice (150) is disposed at a surface (236) of the turbulator (160).

6. The gas turbine engine (10) according to any one of claims 1 to 5, wherein the gaseous fuel orifice (150) is at least partially circumferentially aligned with the turbulator (160).

7. The gas turbine engine (10) according to any one of claims 1 to 6, wherein the turbulator (160) of the first mixing tube (122) of the plurality of mixing tubes (100, 200, 300) is axially offset from the turbulator (160) of the second mixing tube (124) of the plurality of mixing tubes (100, 200, 300).

8. The gas turbine engine (10) according to any one of claims 1 to 7, wherein an additional turbulator (160) is disposed in the first mixing tube (122) of the plurality of mixing tubes (100, 200, 300) axially and circumferentially offset from the turbulator (160).

9. The gas turbine engine (10) according to any one of claims 1 to 8, wherein the first mixing tube (122) of the plurality of mixing tubes (100, 200, 300) includes an additional gaseous fuel orifice (150) at least partially downstream of the additional turbulator (160).

10. The gas turbine engine (10) according to any one of claims 1 to 9, comprising a second additional turbulator (160) disposed in the first mixing tube (122) of the plurality of mixing tubes (100, 200, 300) axially and circumferentially offset from the turbulator (160) and the additional turbulator (160).

11. The gas turbine engine (10) according to any one of claims 1 to 10, wherein the first mixing tube (122) of the plurality of mixing tubes (100, 200, 300) includes a second additional gaseous fuel orifice (150) at least partially downstream of the second additional turbulator (160).

12. The gas turbine engine (10) according to any one of claims 1 to 11, wherein the first mixing tube (122) of the plurality of mixing tubes (100, 200, 300) includes a plurality of lobes (310) disposed at least partially upstream of the gaseous fuel orifice (150).

13. The gas turbine engine (10) of claim 12, wherein a lobe (310) of the plurality of lobes (310) includes the gaseous fuel orifice (150) of the first mixing tube (122) of the plurality of mixing tubes (100, 200, 300).

14. The gas turbine engine (10) according to any one of claims 1 to 13, wherein the mixing tube outlet (142) of the first mixing tube (122) of the plurality of mixing tubes (100, 200, 300) includes a circular, elliptical, or polygonal cross-sectional shape.

15. The gas turbine engine (10) according to any one of claims 1 to 14, further including a nozzle mixing chamber (182) disposed at and fluidly coupled with the mixing tube outlets (142) of the plurality of mixing tubes (100, 200, 300), the nozzle mixing chamber (182) having a converging configuration and fluidly coupling the mixing tube outlets (142) of the plurality of mixing tubes (100, 200, 300) with the combustion chamber (50).
